Europäisches Patentamt

European Patent Office

Office européen des brevets

(11) Publication number: 0 299 509 B1

# EUROPEAN PATENT SPECIFICATION

(45) Date of publication of patent specification: 29.06.94  (51) Int. Cl.⁵: G02B 5/30

(21) Application number: 88111404.5

(22) Date of filing: 15.07.88

(54) Curved polarizing sheet protected with polycarbonate and process for producing the same.

(30) Priority: 17.07.87 JP 177193/87
16.11.87 JP 287375/87

(43) Date of publication of application:
18.01.89 Bulletin 89/03

(45) Publication of the grant of the patent:
29.06.94 Bulletin 94/26

(84) Designated Contracting States:
DE FR IT

(56) References cited:
DE-A- 3 129 162
US-A- 4 038 014
US-A- 4 090 830

PATENT ABSTRACTS OF JAPAN, vol. 10, no.
183 (P-472)[2239], 26th June 1986; & JP-A-61
032 004

(73) Proprietor: MITSUBISHI GAS CHEMICAL COM-
PANY, INC.
5-2, Marunouchi 2-chome
Chiyoda-Ku
Tokyo, 100(JP)

(72) Inventor: Kawaki, Takao c/o Mitsubishi Gas
Chemical Company, Inc.
1-1, Niijuku 6-chome
Katsushika-ku Tokyo(JP)
Inventor: Kawai, Ryozo c/o Mitsubishi Gas
Chemical Company, Inc.
1-1, Niijuku 6-chome
Katsushika-ku Tokyo(JP)
Inventor: Sekine, Yoshihiko c/o Mitsubishi
Gas
Chemical Company, Inc.
1-1, Niijuku 6-chome
Katsushika-ku Tokyo(JP)
Inventor: Nagata, Masaki c/o Mitsubishi Gas
Chemical Company, Inc.
1-1, Niijuku 6-chome
Katsushika-ku Tokyo(JP)
Inventor: Hayashi, Katsushige c/o Mitsubishi
Gas
Chemical Company, Inc.
1-1, Niijuku 6-chome
Katsushika-ku Tokyo(JP)

(74) Representative: Hansen, Bernd, Dr.rer.nat. et
al
Hoffmann, Eitle & Partner
Patentanwälte
Postfach 81 04 20
D-81904 München (DE)

EP 0 299 509 B1

**Description**

FIELD OF THE INVENTION

This invention relates to a curved polarizing sheet having a surface protective layer comprising a polycarbonate resin film or sheet, which is free from optical strain and excellent in impact strength, and a process for producing the same. The polarizing sheet of this invention is free from optical strain and has a marked anti-glare effect and excellent impact resistance and is, therefore, particularly suited as lens of sunglasses, goggles, etc.

BACKGROUND OF THE INVENTION

The use of sunglasses, goggles, etc. possessing a polarizing function is extending steadily in the field of outdoor sports, such as fishing, skiing, cycling, and so on. Sunglasses and goggles using lenses made of aromatic polycarbonates cutting near infrared rays or ultraviolet rays also come into general use.

Conventional polarizing sheets have a surface protective layer comprising cellulose resins, e.g., triacetyl cellulose, acrylic resins, polyester resins, etc. However, these protective layers are insufficient for uses requiring resistance to heat, low temperatures, water and impact.

An aromatic polycarbonate resin is a candidate for the uses requiring the above-described resistance properties, but there has been reported no case of practically using an aromatic polycarbonate sheet as a protective layer, and literature on such use is scarce. Sunglasses or goggles using polarizing lenses made of polycarbonate have not yet been put into practical use.

JP-A-61-32004 discloses sticking films of plastics such as polycarbonate to both sides of a polarizing film formed by adsorbing a polarizing element such as iodine or a special dye to a drawn film of plastics such as polyvinyl alcohol to form a flat polarizing plate. In more detail, the flat polarizing plate is formed by mounting the polarizing film on a mold and injection molding a molten resin under pressure.

US-A-4 038 014 discloses that a polarizing iodine-iodide/polyvinyl alcohol film with laminated cellulose acetate butyrate may be formed into a lens by heating while exerting pressure. In more detail, a flat polarizing film is molded at a temperature of 85-95°C, this being lower than the heat-resistant temperature of the film.

Possible processes for producing a polycarbonate polarizing lens include (1) a process comprising laminating a curved polycarbonate lens prepared by known techniques such as injection molding on both sides of a polarizing thin film and (2) a process comprising laminating a polycarbonate film or sheet on both sides of a polarizing thin film and forming the laminate into a curved laminate. These processes, however, have the respective disadvantages as set forth below. The molded polycarbonate lens to be used in the process (1) suffers from serious optical strain and, upon laminating on a polarizing film, causes an interference band. Besides, the step of adhering the polarizing film to the curved surface of the lens is difficult to carry out due to the tearability of the film. In the case of the process (2), although an iodine/polyvinyl alcohol (PVA) type polarizing film which is in general use is a very excellent polarizing film, it is liable to browning or color change on forming under heating. If heating conditions are set so as not to cause browning or color change, the resulting curvature is hardly fixed permanently. In addition, the polarizing film is apt to have cracks due to a difference of heat shrinkage factor between polycarbonate and the polarizing film depending on the kind of an adhesive used for laminating.

SUMMARY OF THE INVENTION

As a result of extensive investigations, the inventors have found that a curved polarizing sheet free from the above-described disadvantages can be obtained by approriately selecting the kind of a polarizing film, the thickness of a laminate, the heating conditions for forming, and the like and by using a specific laminating adhesive which exhibits sufficient adhesion during curving and also retains heat resistance, cold resistance, water resistance, and the like after the curvature forming, and thus completed the present invention.

The present invention relates to a process for producing a curved polarizing sheet free from optical strain which comprises laminating a polycarbonate film or sheet on both sides of a polarizing film comprising a polymer film containing an orientated dichroic dye to prepare a polarizing laminate and forming the polarizing laminate so as to have a curved surface while heating at a temperature ranging from 120°C to a temperature higher than the glass transition temperature of the polycarbonate by 30°C and applying a force of 1.2 kg/cm$^2$ or less to the polarizing laminate before the heating temperature reaches the glass transition temperature of the polycarbonate.

Preferably, the polarizing laminate has a total thickness of from 0.5 to 2.5 mm.

Preferably, the curved surface has a curvature radius of 80 mm to 120 mm.

In a preferred embodiment of the present invention, the laminating of the polycarbonate film or sheet on both sides of the polarizing film is effected by using a liquid adhesive consisting mainly of diphenylmethane-4,4'-diisocyanateand a polyol having a molecular weight of from 500 to 3,000.

## DETAILED DESCRIPTION OF THE INVENTION

The polycarbonate film or sheet (hereinafter simply referred to as a polycarbonate sheet) which can be used in the present invention includes general aromatic polycarbonate resin sheets prepared from bisphenols (e.g., bisphenol A) and phosgene or carbonic esters; and sheets prepared from transparent copolycarbonate resins or transparent resin compositions containing other resins. If desired, these polycarbonate sheets may have provided thereon a functional coating, such as a heat-formable hard coat, an antifogging coat, an infrared-reflective or absorbable coat, a ultraviolet-reflective or absorbable coat, etc. Such finishing may be carried out after the curvature forming of the polarizing laminate.

The polarizing thin film to be used comprises a high polymer film, preferably a PVA film, on which dichroic dye is orientated. Although the conventionally employed iodine/PVA type polarizing films have excellent characteristics, they are of no use in the present invention since they undergo browning to lose polarizing properties when laminated with polycarbonate and heated for curvature forming.

The polycarbonate sheet is laminated on both sides of the polarizing film to obtain a polarizing laminate having a polycarbonate protective layer on each side. The thickness of the laminate preferably ranges from 0.5 to 2.5 mm. If it is less than 0.5 mm, the laminate tends to develop defects such as wrinkles during forming. A laminate having a large thickness exceeding 2.5 mm is difficult to prepare and, besides, encounters difficulty in curvature forming without damaging the polarizing film to obtain a curved laminate free from optical strain. Accordingly, the thickness of each polycarbonate sheet to be laminated is appropriately selected so that the total thickness of the resulting laminate may fall within the above-recited range.

Laminating can be carried out by using commonly employed adhesives in a known manner. In particular, it is preferred in the present invention to use a specific adhesive composition comprising diphenylmethane-4,4'-diisocyanate and a polyol having a molecular weight of from 500 to 3,000. A preferred compounding ratio of the diphenylmethane-4,4'-diisocyanate is from 5 to 150 parts, more preferably from 10 to 80 parts, by weight per 100 parts by weight of the polyol. Such a compounding ratio corresponds to a molar ratio of -NCO group in diphenylmethane-4,4'-diisocyanate to -OH group in the polyol (NCO/OH) in the range of from 0.2 to 6, preferably from 0.4 to 3. If the amount of the diphenylmethane-4,4'-diisocyanate is less than 5 parts (i.e., NCO/OH < 0.2) or exceeds 150 parts (i.e., NCO/OH > 6), the adhesive layer cannot be cured sufficiently.

The polyol having a molecular weight of 500 to 3,000 may be any of primary, secondary and tertiary polyols. The number of hydroxyl groups in the polyol usually ranges from 2 to 5, preferably from 2 to 3. The molecular weight of the polyol is preferably in the range of from 500 to 1,000. If it is less than 300, the curing rate of the adhesive layer considerably decreases, and if it exceeds 3,000, adhesiveness to the polycarbonate sheet is reduced.

Specific examples of the polyol to be used include polyether polyols, e.g., polyethyene glycol, polypropylene glycol, etc. polyester polyols prepared by condensation of an aromatic or aliphatic dicarboxylic acid (e.g., terephthalic acid, isophthalic acid, adipic acid, etc.) and a diol (e.g., ethylene glycol, propanediol, butanediol, pentanediol, hexanediol, etc.); polyester polyols in which a part of the dicarboxylic acid or diol is displaced with a tricarboxylic acid or a triol or tetraol; and lactone type polyester polyols (e.g., polycaprolactone polyol). These polyols may be used either individually or in combinations of two or more thereof.

A part of the diphenylmethane-4,4′-diisocyanate in the adhesive composition, usually not more than 50 mol%, preferably not more than 30 mol% thereof, may be displaced with other isocyanate compounds, e.g., tolyene diisocyanate, hexamethylene diisocyanate, xylylene diisocyanate, cyclohexyl diisocyanate, cyclohexanephenylene diisocyanate, polymethylene polyphenyl isocyanate, naphthalene-1,5-diisocyanate, etc.

The viscosity of the adhesive composition is properly adjusted by dilution with a solvent. The diluting solvent to be used for viscosity adjustment or the like may be any of those capable of dissolving the above-described isocyanate compounds and polyols, including esters, e.g., ethyl acetate, propyl acetate, isopropyl acetate, methyl propionate, etc. ketones, e.g., methyl ethyl ketone, methyl propyl ketone, methyl isobutyl ketone, etc.; ethers, e.g., dioxane, etc.; aromatic hydrocarbons, e.g., xylene, toluene, etc.; amides, e.g., N,N-dimethylformamide, N,N-dimethylacetamide, etc.; and so on. From the viewpoint of easiness in handling or conditions on use, ester solvents, such as ethyl acetate, propyl acetate, isopropyl acetate, methyl propionate, etc., are particularly preferred. The amount of these solvents to be used can be determined depending on coating conditions and the like and is usually selected so that the adhesive may have a solid content of from 10 to 80% by weight.

If desired, the adhesive composition according to the present invention may further contain additives, such as a catalyst for reaction promotion, a surface active agent, defoaming agent, etc. For example, the reaction promotor includes polyamine compounds, e.g., triethylamine, triethylenediamine, etc., and metal-containing compounds, e.g., stannic chloride, ferric chloride, zinc naphthenate, etc. The viscosity-controlling agent includes dioctyl phthalate. The defoaming agent includes silicone compounds.

The polarizing laminate can be obtained by coating an adhesive, preferably the above-described specific adhesive composition, on the polarizing film or aromatic polycarbonate sheet to a dry thickness of from 1 to 50 $\mu$m, preferably from 3 to 10 $\mu$m, by means of a bar coater, a roll coater, etc., followed by drying at a temperature of from 20 to 100°C for at least 5 seconds. In cases of using solvents other than ester solvents, the solvent is preferably removed completely prior to laminating. If the drying temperature is lower than 20°C, the curing reaction of the adhesive layer hardly proceeds. If it exceeds 100°C, the polarizing film is liable to shrink. After the application of the adhesive, the aromatic polycarbonate sheet is superposed on each side of the polarizing film and held at a temperature of from 10 to 130°C, preferably from 40 to 80°C, for a period of from about 0.5 to about 1 week. When the thickness of the adhesive layer is less than 1 $\mu$m, sufficient adhesion cannot be ensured. If it exceeds 50 $\mu$m, not only the adhesive force, particularly the shear adhesive force is reduced, but also optical blur would occur.

Curvature forming of the thus obtained polarizing laminate by gradual deformation under heat can be carried out by vacuum forming under heat or pressure forming under heat.

The temperature for effecting the forming usually ranges from 120°C to a temperature higher than the glass transition temperature (Tg) of the aromatic polycarbonate sheet used by 30°C [i.e., 120°C to (Tg + 30°C)], preferably from 125°C to (Tg + 25°C), more preferably from 125°C to 160°C. The upper limit of the forming temperature depends on the method of forming. That is, in the case of vacuum forming under heat, 160°C is a suitable upper limit. In the case of applying pressure to both sides of the laminate as in pressure forming, temperature higher than the glass transition temperature by 25° to 30°C can also be employed suitably. More specifically, in the case of using a polycarbonate resin prepared from bisphenol A in vacuum forming, the forming temperature is 125 to 135°C.

The curvature forming is preferably commenced by applying force to the polarizing laminate between the point when the temperature of the laminate reaches the above-recited temperature and the point when that temperature reaches the glass transition temperature of the polycarbonate, namely, before the polarizing laminate undergoes remarkable deformation, particularly from the point when the temperature of the polarizing laminate reaches 125°C. The forming force to be applied is usually 1.2 kg/cm$^2$ or less, preferably between 0.01 and 1.1 kg/cm$^2$, though depending on the forming method and the temperature. During the deformation, the force applied is maintained within the above range. The force to be applied after completion of the deformation is not particularly limited as long as the polycarbonate sheet is not fluidized to cause adhesion to a forming tool, but is subject to variation depending on the temperature. The higher the temperature, the smaller the force. The upper limit of the force after completion of the deformation is usually 20 kg/cm$^2$. The time required for curvature forming usually ranges from 2 to 10 minutes, preferably from 3 to 7 minutes.

If the force applied during the deformation of the laminate exceeds 1.2 kg/cm$^2$, defects such as cracks tend to be developed in the polarizing film due to stress imposed between the two polycarbonate sheets or between the polycarbonate sheet and the sandwiched polarizing film. On the other hand, if the force is too small, the laminate would receive unfavorable shaping such as wrinkles or unevenness on its surface in addition to the desired shaping in agreement with a forming mold due to a difference of heat shrinkage factor between the polycarbonate sheet and the polarizing film and the like factors.

The above-described process is not only suitable for producing polarizing polycarbonate lenses of goggles, sunglasses, etc. but applicable to the production of other optics, such as polarizing windshields for motorcycles and the like.

The present invention is now illustrated in greater detail with reference to the following Examples, but it should be understood that the present invention is not deemed to be limited thereto.

In these examples, transmissions were measured by means of a spectrophotometer, "HITACHI 330" manufactured by Hitachi, Ltd.

Degrees of polarization (%) of polarizing laminates or curved polarizing sheets were determined as follows. A sample was cut at an angle of 45° with respect to a plane of polarization, and two of the cut surface were overlapped in such a manner that the directions of orientation of the two polarizing films were parallel (parallel laminate) or crossed (cross laminate). The transmission of the parallel laminate ($H_0$) and that of the cross laminate ($H_{90}$) were measured. Luminosity corrections in the visible region (400 to 700 nm) were made on all the measurements, and the values were averaged. The degree of polarization can be calculated from formula:

$$[(H_0 - H_{90})/(H_0 + H_{90})]^{0.5} \times 100$$

Optical strain was judged by observing an interference fringe produced when an object is interposed between two polarizing sheets or when the polarizing sheets are laminated.

EXAMPLE 1

Preparation of Polarizing Film:

A PVA film ("Kuraray Vinylon #7500" produced by Kuraray Co., Ltd.) was dyed in an aqueous solution containing 0.40 g/l of Chlorantine Fast Red, 0.30 g/l of Brilliant Blue 6B, 0.30 g/l of Direct Cobalt Blue, 0.30 g/l of Primula blue 6G, and 0.30 g/l of Chrysophenine at 35°C for 8 minutes.

The dyed film was dipped in an aqueous solution containing 0.30 g/l of nickel acetate tetrahydrate and 12.2 g/l of boric acid for 10 minutes, and then uniaxially stretched 5 times in the same solution. After taking out of the aqueous solution, the film, while being held under tension, was washed with water, dried, and then subjected to heat treatment at 110°C for 10 minutes to obtain a polarizing film.

Preparation of Polarizing Laminate:

The resulting polarizing film was sandwiched between 700 $\mu$m thick polycarbonate sheets to obtain a laminate having a transmission of 38.6% and a degree of polarization of 97.5%.

Curvature Forming:

The laminate was heated in an atmosphere of 148°C, and vacuum forming by suction was commenced simultaneously. The laminate was sucked off to 2 mmHg over 30 minutes and vacuum-formed for 6 minutes to obtain a lens having a curvature radius of 90 mm. On examination, the resulting lens suffered from neither visually perceivable defects such as hard spots, cracks, and wrinkles, nor optical strain. Further, the lens had a transmission of 38.3% and a degree of polarization of 97.8%, proving substantially equal to the laminate before forming.

EXAMPLE 2

The same procedure of Example 1 was repeated, except for using 700 $\mu$m thick polycarbonate films having an acrylic resin hard coat on one side thereof. As a result, a satisfactory polarizing lens was produced.

EXAMPLE 3

A polarizing film was prepared in the same manner as in Example 1, except for changing the dyeing temperature to 40°C and the dyeing time to 6 minutes. A 0.6 mm thick polycarbonate sheet and a 1.0 mm thick polycarbonate sheet both having the same hard coat as in Example 2 were laminated on each side of the polarizing film to prepare a laminate having a transmission of 37.0% and a degree of polarization of 98.5%.

The laminate was placed on a forming mold having a spherical surface heated at 140°C, allowed to stand thereon for 5 minutes, and then pressed at a closing speed of 5 mm/min under a pressure reaching 10 kg/cm$^2$, at which forming was completed, to obtain a polycarbonate lens having a curvature radius of 100 mm.

On examination, the resulting lense suffered from no visually perceivable defects such as hard spots, cracks, wrinkles, etc., or no optical strain, and was found to have a transmission of 37.1% and a degree of polarization of 98.3%, proving substantially equal to the laminate before forming.

COMPARATIVE EXAMPLE 1

A polarizing laminate was prepared in the same manner as in Example 2, except for using an iodine type polarizing film prepared in a known manner. The laminate had a transmission of 41.0% and a degree of polarization of 99.2%.

When the resulting laminate was formed in the same manner as in Example 1, the laminate underwent decoloration and turned to virtually transparent.

COMPARATIVE EXAMPLE 2

A polycarbonate lens was produced in the same manner as in Example 3, except for using 0.2 mm thick polycarbonate films for laminating. The resulting lens suffered from wrinkles.

EXAMPLE 4

An isocyanate adhesive composition was prepared from a polyol and an isocyanate as shown in Table 1 below in indicated amounts and 600 parts by weight of ethyl acetate as a solvent.

6

## Table 1

| Run No. | Polyol Kind | M | Iso-cyanate* | Polyol/Isocyanate part/part** | NCO/OH |
|---------|-------------|-----|--------------|-------------------------------|--------|
| 1 | polypropylene glycol | 900 | MDI | 100/25 | 0.9 |
| 2 | polyethylene glycol | 1000 | MDI | 100/50 | 2.0 |
| 3 | polybutylene adipate | 500 | MDI | 100/50 | 1.0 |
| 4 | polyprolactone diol | 1000 | MDI | 100/25 | 1.0 |
| 5 | polypropylene glycol | 900 | TDI | 100/25 | 1.3 |
| 6 | polyethylene glycol | 1000 | TDI | 100/50 | 2.9 |
| 7 | polybutylene adipate | 1000 | TDI | 100/50 | 2.9 |
| 8 | polypropylene glycol | 900 | XDI | 100/25 | 1.2 |
| 9 | " | " | CHDI | 100/25 | 1.4 |
| 10 | " | " | HMDI | 100/25 | 1.3 |

Note:  *   MDI:   Diphenylmethane-4,4'-diisocyanate

TDI:   Tolylene diisocyanate

XDI:   Xylylene diisocyanate

CHDI:   Cyclohexyl diisocyanate

HMDI:   Hexamethylene diisocyanate

**   By weight

The above prepared adhesive composition was coated on one side of the same polarizing film as prepared in Example 1 by means of a bar coater (#24) and dried at room temperature for about 5 minutes. A 700 μm thick aromatic polycarbonate sheet ("lupiron" produced by Mitsubishi Gas Chemical Co., Ltd.) was laminated on the adhesive layer by means of a laminator (manufactured by Mitsushiba Shoji Co., Ltd.; nip pressure: 4.0 kg/cm²G). The above procedure was repeated on the other side of the polarizing film.

The resulting polarizing laminate was aged at 40°C for 24 hours and then at 70°C for 24 hours to complete curing of the adhesive.

A disc of 8 cm in diameter was cut out of the resulting laminate and intimately placed on a vacuum forming apparatus having a curvature radius of 80 mm composed of an aluminum dish on which a silicone rubber layer was provided in an atmosphere having a temperature of 145°C, sucked off to 267 Pa (2 mmHg) over 30 minutes, and vacuum-formed for 5 minutes.

Another disc of 8 cm in diameter cut out of the laminate was placed on a mold having a curvature radius of 90 mm, maintained thereon at 140°C for 5 minutes, and pressed at a mold closing speed of 5 mm/min. When the pressure applied reached 10 kg/cm$^2$, the press forming was completed. The formability of the laminate in the above-described forming is shown in Table 2 below.

TABLE 2

| Run No. | Vacuum Forming | Press Forming |
|---|---|---|
| 1 | formable* | formable |
| 2 | " | " |
| 3 | " | " |
| 4 | " | " |
| 5 | unformable** | unformable |
| 6 | " | " |
| 7 | " | " |
| 8 | " | " |
| 9 | " | " |
| 10 | " | " |

Note:

\* Delamination between the polarizing layer and the polycarbonate layer did not occur.

\** Delamination between the polarizing layer and the polycarbonate layer occurred.

It can easily be seen from Table 2 that the polarizing laminates using a liquid adhesive consisting mainly of diphenylmethane-4,4′-diisocyanate and a polyol having a molecular weight of 500 to 3,000 exhibit excellent formability in curvature forming under heat.

Then, the curved polarizing laminate used in Run No. 1 was subjected to durability test under the following conditions and evaluated for adhesion and polarization degree. The results obtained are shown in Table 3. The adhesion was evaluated by judging whether or not delamination between the polarizing layer and the aromatic polycarbonate layer was observed.

Heat Resistance Test:    at 100°C for 1000 hours
Cold Resistance Test:    at -20°C for 1000 hours
Moisture Resistance Test:    at 80°C, 95% RH for 1000 hours
Water Resistance Test:    in boilding water for 1 hour

TABLE 3

| Testing Item | Adhesion | Degree of Polarization (%) | |
|---|---|---|---|
| | | Before Test | After Test |
| Heat resistance | no delamination observed | 98.5 | 98.0 |
| Cold resistance | " | 98.5 | 98.5 |
| Moisture resistance | " | 98.5 | 98.0 |
| Water resistance | " | 98.5 | 98.5 |

As is apparent from the foregoing Examples and Comparative Examples, it can easily be understood that the polarizing polycarbonate lens according to the present invention is free from optical strain and possesses excellent properties inherent to polycarbonate. Further, when a liquid adhesive consisting mainly of diphenylmethane-4,4′- diisocyanate and a polyol having a molecular weight of 500 to 3000 is used for laminating, the adhesion between a polarizing film and the polycarbonate sheet is markedly improved to exhibit excellent curvature formability and durability after forming.

Thus, the curved polarizing laminate of the present invention possesses both excellent impact resistance of aromatic polycarbonates and excellent durability, such as heat resistance, cold resistance, moisture resistance and water resistance and, therefore, can be suitably used for sunglasses, goggles, windshields of helmets or motorcycles, etc.

While the invention has been described in detail and with reference to specific embodiments thereof, it will be apparent to one skilled in the art that various changes and modifications can be made therein without departing from the scope thereof.

**Claims**

1. A process for producing a curved polarizing sheet free from optical strain which comprises laminating a polycarbonate film or sheet on both sides of a polarizing film comprising a polymer film containing an orientated dichroic dye to prepare a polarizing laminate and forming the polarizing laminate so as to have a curved surface while heating at a temperature ranging from 120°C to a temperature higher than the glass transition temperature of the polycarbonate by 30°C and applying a force of 1.2 kg/cm$^2$ or less to the polarizing laminate before the heating temperature reaches the glass transition temperature of the polycarbonate.

2. A process as claimed in claim 1, wherein said polarizing laminate has a total thickness of from 0.5 to 2.5 mm.

3. A process as claimed in claim 1, wherein said heating is at a temperature ranging from 125°C to a temperature higher than the glass transition temperature of the polycarbonate by 25°C.

4. A process as claimed in claim 1, wherein said heating is at a temperature ranging from 125°C to 160°C.

5. A process as claimed in claim 1, wherein said force to be applied ranges from 0.01 to 1.1 kg/cm$^2$.

6. A process as claimed in claim 1, wherein said application of force is commenced when the temperature of the polarizing sheet reaches 125°C.

7. A process as claimed in claim 1, wherein said curved surface has a curvature radius of 80 mm to 120 mm.

8. A process as claimed in claim 1, wherein said laminating is carried out by using a liquid adhesive consisting mainly of diphenylmethane-4,4'-diisocyanate and a polyol having a molecular weight of from 500 to 3,000.

9. A process as claimed in claim 8, wherein said polyol has a molecular weight of from 500 to 1,000.

10. A process as claimed in claim 8, wherein said diphenylmethane-4,4'-diisocyanate is present in an amount of from 5 to 150 parts by weight per 100 parts by weight of the polyol.

11. A process as claimed in claim 8, wherein said diphenylmethane-4,4'-diisocyanate is present in an amount of from 10 to 80 parts by weight per 100 parts by weight of the polyol.

12. A process as claimed in claim 1, wherein the curved polarizing sheet is in the form of a lens.

**Patentansprüche**

1. Verfahren zur Herstellung einer gekrümmten Polarisationsfolie, die von optischer Verzerrung frei ist, umfassend
   Laminieren eines Polycarbonatfilms oder einer Polycarbonatfolie auf beide Seiten eines Polarisationsfilms, der einen Polymerfilm, welcher einen orientierten dichroitischen Farbstoff enthält, umfaßt, zur Herstellung eines Polarisationslaminat, sowie Formen des Polarisationslaminats derart, daß es eine gekrümmte Oberfläche aufweist, wobei es in einem Temperaturbereich von 120°C bis zu einer Temperatur, die um 30°C über der Glasübergangstemperatur des Polycarbonats liegt, erhitzt wird, und eine Kraft von 1,2 kg/cm$^2$ oder weniger auf das Polarisationslaminat angewendet wird, bevor die Heiztemperatur die Glasübergangstemperatur des Polycarbonats erreicht.

2. Verfahren nach Anspruch 1, bei dem das Polarisationslaminat eine Dicke von 0,5 bis 2,5 mm hat.

**3.** Verfahren nach Anspruch 1, bei dem das Erhitzen in einem Temperaturbereich von 125°C bis zu einer Temperatur, die um 25°C höher ist als die Glasübergangstemperatur des Polycarbonats, erfolgt.

**4.** Verfahren nach Anspruch 1, bei dem das Erhitzen in einem Temperaturbereich von 125°C bis 160°C erfolgt.

**5.** Verfahren nach Anspruch 1, bei dem die Kraft, die angewendet wird, im Bereich zwischen 0,01 bis 1,1 kg/cm$^2$ liegt.

**6.** Verfahren nach Anspruch 1, bei dem mit der Kraftanwendung begonnen wird, wenn die Temperatur der Polarisationsfolie 125°C erreicht.

**7.** Verfahren nach Anspruch 1, bei dem die gekrümmte Oberfläche einen Krümmungsradius von 80 mm bis 120 mm hat.

**8.** Verfahren nach Anspruch 1, bei dem das Laminieren unter Verwendung eines flüssigen Klebstoffs, der hauptsächlich aus Diphenylmethan-4,4'-diisocyanat und einem Polyol mit einem Molekulargewicht zwischen 500 und 3000 besteht, durchgeführt wird.

**9.** Verfahren nach Anspruch 8, bei dem das Polyol ein Molekulargewicht zwischen 500 und 1000 hat.

**10.** Verfahren nach Anspruch 8, bei dem das Diphenylmethan-4,4'-diisocyanat in einer Menge von 5 bis 150 Gewichtsteilen pro 100 Gewichtsteile Polyol vorliegt.

**11.** Verfahren nach Anspruch 8, bei dem Diphenylmethan-4,4'-diisocyanat in einer Menge von 10 bis 80 Gewichtsteilen pro 100 Gewichtsteile Polyol vorliegt.

**12.** Verfahren nach Anspruch 1, bei dem die gekrümmte Polarisationsfolie die Form einer Linse hat.

**Revendications**

**1.** Procédé pour produire une feuille polarisante incurvée dépourvue de contrainte ou déformation optique, qui comprend l'application en stratification d'une pellicule ou feuille de polycarbonate des deux côtés d'une pellicule polarisante comprenant une pellicule polymère contenant un colorant dichroïque orienté pour préparer un stratifié polarisant et le formage du stratifié polarisant de façon à lui conférer une surface incurvée tout en le chauffant à une température comprise entre 120°C et une température supérieure de 30°C à la température de transition vitreuse du polycarbonate, et l'application d'une force égale ou inférieure à 1,2 kg/cm$^2$ au stratifié polarisant avant que la température de chauffage atteigne la température de transition vitreuse du polycarbonate.

**2.** Procédé tel que revendiqué à la revendication 1, dans lequel ledit stratifié polarisant a une épaisseur totale de 0,5 à 2,5 mm.

**3.** Procédé tel que revendiqué à la revendication 1, dans lequel ledit chauffage est effectué à une température comprise entre 125°C et une température supérieure de 25°C à la température de transition vitreuse du polycarbonate.

**4.** Procédé tel que revendiqué à la revendication 1, dans lequel ledit chauffage est réalisé à une température comprise entre 125°C et 160°C.

**5.** Procédé tel que revendiqué à la revendication 1, dans lequel ladite force à appliquer se situe entre 0,01 et 1,1 kg/cm$^2$.

**6.** Procédé tel que revendiqué à la revendication 1, dans lequel ladite application de force est commencée quand la température de la feuille polarisante atteint 125°C.

**7.** Procédé tel que revendiqué à la revendication 1, dans lequel ladite surface incurvée a un rayon de courbure de 80 mm à 120 mm.

10

8. Procédé tel que revendiqué à la revendication 1, dans lequel ladite stratification est effectuée par utilisation d'un adhésif liquide consistant principalement en du 4,4-diisocyanate de diphénylméthane et en un polyol ayant un poids moléculaire de 500 à 3 000.

9. Procédé tel que revendiqué à la revendication 8, dans lequel ledit polyol a un poids moléculaire compris entre 500 et 1 000.

10. Procédé tel que revendiqué à la revendication 8, dans lequel ledit 4,4'-diisocyanate de diphénylméthane est présent en une quantité de 5 à 150 parties en poids pour 100 parties en poids du polyol.

11. Procédé tel que revendiqué à la revendication 8, dans lequel ledit 4,4'-diisocyanate de diphénylméthane est présent en une quantité de 10 à 80 parties en poids pour 100 parties en poids du polyol.

12. Procédé tel que revendiqué à la revendication 1, dans lequel la feuille polarisante incurvée a la forme d'une lentille ou d'un verre de lunette.